# EUROPÄISCHE PATENTSCHRIFT

(11) **EP 2 958 952 B1**
(45) Veröffentlichungstag und Bekanntmachung des Hinweises auf die Patenterteilung: **30.10.2019**
(21) Anmeldenummer: 14706556.9
(22) Anmeldetag: 24.02.2014
(51) Int. Cl.: C08G 18/66, C08G 18/73, C08G 18/76, C08G 18/10, C08G 18/12, C09D 175/06, C08G 18/42

(54) **VERMINDERTE VERFÄRBUNG VON THERMOPLASTISCHEN POLYURETHANEN BASIEREND AUF POLYMERPOLYOLEN DURCH EINBAU ALIPHATISCHER ISOCYANATE**
REDUCED DISCOLOURATION OF THERMOPLASTIC POLYURETHANES BASED ON POLYMER POLYOLS THROUGH THE INCORPORATION OF ALIPHATIC ISOCYANATES
COLORATION RÉDUITE DE POLYURÉTHANE THERMOPLASTIQUES À BASE DE POLYOLS POLYMÈRES PAR L'INTRODUCTION D'ISOCYANATE ALIPHATIQUE

(30) Priorität: 25.02.2013 EP 13156539
(43) Veröffentlichungstag der Anmeldung: 30.12.2015
(73) Patentinhaber: BASF SE, 67056 Ludwigshafen am Rhein (DE)
(72) Erfinder: PRISSOK, Frank, 49448 Lemförde (DE); WETTACH, Henning, 49078 Osnabrück (DE)
(74) Vertreter: BASF IP Association
(86) Internationale Anmeldenummer: PCT/EP2014/053504
(87) Internationale Veröffentlichungsnummer: WO 2014/128290

(56) Entgegenhaltungen:
- EP-A1- 1 273 606
- EP-A1- 2 119 735
- EP-A2- 2 392 602
- WO-A1-2011/083000

## Beschreibung

Die vorliegende Erfindung betrifft ein Verfahren zur Herstellung eines Polyurethans, umfassend wenigstens die Schritte (A) Inkontaktbringen wenigstens eines Polymerpolyols mit wenigstens einem ersten Polyisocyanat in einer Menge von 0,1 bis 20 Mol-% der gesamten Menge an Polyisocyanat, um ein Prepolymer zu erhalten, welches im Wesentlichen Hydroxy-Endgruppen aufweist, und (B) Inkontaktbringen des Prepolymers aus Schritt (A) mit wenigstens einem zweiten Polyisocyanat und gegebenenfalls weiteren Additiven, um das Polyurethan zu erhalten, ein Polyurethan erhältlich durch dieses Verfahren sowie die Verwendung eines solchen Polyurethans als Beschichtungen, Kabel, Steckverbindungen, Solarmodule, Folien, Formteile, Schuhsohlen und Schuhteile, Bälle und Ballteile, Rollen, Fasern, Verkleidungen in Automobilen, Profile, Laminate und Wischerblätter, Schläuche, Kabelstecker, Faltenbälge, Schleppkabel, Kabelummantelungen, Dichtungen, Non Woven-Gewebe, Riemen oder Dämpfungselemente.

Verfahren zur Herstellung von Polyurethanen ausgehend von Polymerpolyolen und Polyisocyanaten, wobei möglichst nicht gefärbte Produkte erhalten werden sollen, sind aus dem Stand der Technik bereits bekannt.

WO 2011/083000 A1 offenbart ein Verfahren zur Herstellung von Polyesterpolyolen, insbesondere ausgehend von natürlichen Rohstoffen, sowie die weitere Umsetzung der beschriebenen Polyesterpolyole zu Polyurethanen mit heller Eigenfarbe und guten mechanischen Eigenschaften. Um entsprechende chemische Verbindungen aus nachwachsenden Rohstoffen zu erhalten, ist es gemäß diesem Dokument problematisch, dass entsprechende Ausgangsverbindungen einem weiteren Reinigungsschritt unterzogen werden müssen, um entsprechende Produkte zu erhalten, die bezüglich ihrer Eigenfarbe sowie der mechanischen Eigenschaften hohen Ansprüchen genügen. Das genannte Dokument schlägt dazu vor, mindestens eine aus natürlichen Rohstoffen gewonnene Carbonsäure mit mindestens zwei Säuregruppen, mindestens einem mehrwertigen Alkohol, mindestens einer organischen Phosphit-Verbindung sowie mindestens einer Lewis-Säure umzusetzen.

WO 2010/107562 A1 offenbart ein thermoplastisches Polyurethan, welches eine reduzierte Neigung zum Anlaufen aufweist. Dazu wird zunächst eine Reaktion zwischen einem Hydroxyterminierten Polyester, einem Polyisocyanat und einem Glycol-Kettenverlängerungsmittel durchgeführt, wobei der Hydroxy-terminierte Polyester Wiederholungseinheiten, erhältlich aus 1,3-Propylenglycol und Dicarbonsäuren enthält.

EP 1 477 505 A1 offenbart ein Verfahren zur Herstellung eines Polyurethans ausgehend von einem Polyesterpolyol. Die Problematik, dass entsprechende Produkte, hergestellt aus nachwachsenden Rohstoffen eine unerwünschte Eigenfärbung aufweisen können, ist in diesem Dokument nicht behandelt.

WO 2010/031792 A1 offenbart Polyurethane auf Basis eines Polyesterdiols mit einer Dicarbonsäure mit einer geraden Zahl von C-Atomen und einem Diol mit einer ungeraden Zahl an C-Atomen, jeweils aus nachwachsenden Rohstoffen.

US 2011/0206734 A1 offenbart ein Verfahren zur Herstellung eines thermoplastisch verarbeitbaren Polyurethan-Elastomers. Um dieses zu erhalten, werden ein oder mehrere lineare(s) Polyesterdiol(e) mit einer Funktionalität von 1,8 bis 2,2, auf Basis von Bernsteinsäure und 1,3-Propandiol mit einem oder mehreren organischen Diisocyanaten und einem oder mehreren Diolen umgesetzt. Das Verfahren gemäß diesem Dokument sieht vor, dass in einer ersten Stufe ein entsprechendes Polyesterdiol mit einem Polyisocyanat umgesetzt wird, um ein entsprechendes Prepolymer zu erhalten, welches im Wesentlichen OCN-Gruppen als Endgruppen aufweist.

Polyesterverbindungen aus Carbonsäuren und zum Teil auch aus Alkoholen aus nachwachsenden Rohstoffen, speziell solche hergestellt aus nachwachsenden Fetten oder Ölen, zeigen üblicherweise eine gelblich/braune Färbung, die durch nicht näher spezifizierbare Verbindungen mit höher konjugierten Elektronensystemen zustande kommt. Diese Verfärbung zeigt sich beispielsweise auch in daraus hergestellten thermoplastischen Polyurethanen. Die Verfärbung führt dazu, dass Produkte aus nachwachsenden Rohstoffen am Markt nicht die Akzeptanz finden wie Produkte aus wohldefinierten Rohstoffen auf der Basis von Erdölprodukten, obwohl die mechanischen/dynamischen Eigenschaften der Produkte aus nachwachsenden Rohstoffen teilweise sogar besser sind als die ihrer Erdöl-Äquivalente.

Aufgabe der vorliegenden Erfindung gegenüber dem Stand der Technik war es daher, ein Verfahren bereitzustellen, in dem entsprechende Polymerpolyole, bevorzugt aus nachwachsenden Rohstoffen, und entsprechende Polyisocyanate eingesetzt werden können, und entsprechende Produkte erhalten werden, die keine störende gelbliche oder bräunliche Färbung aufweisen, wobei die mechanischen Eigenschaften mindestens auf dem Niveau der Produkte petrochemischen Ursprungs sein sollen.

Diese Aufgaben werden gelöst durch das erfindungsgemäße Verfahren zur Herstellung eines Polyurethans, umfassend wenigstens die Schritte:
(A) Umsetzung wenigstens eines Polyesterpolyols und/oder Polyetherpolyols mit wenigstens einem ersten Polyisocyanat in einer Menge von 0,1 bis 20 Mol-% der gesamten Menge an Polyisocyanat, um ein Prepolymer zu erhalten, welches im Wesentlichen Hydroxy-Endgruppen aufweist, und
(B) Umsetzung des Prepolymers aus Schritt (A) mit wenigstens einem zweiten Polyisocyanat und gegebenenfalls weiteren Additiven, um das Polyurethan zu erhalten.

In dem Verfahren gemäß der vorliegenden Erfindung wird ein Polyurethan hergestellt, indem ein Polymerpolyol, bevorzugt ein Polyesterpolyol, weiter bevorzugt ein Polyesterdiol, mit einem oder mehreren Polyisocyanat(en), umgesetzt wird, wobei zunächst nur ein Teil der gesamten Menge an wenigstens einem Polyisocyanat, besonders bevorzugt wenigstens ein aliphatisches Diisocyanat, eingesetzt wird, um ein Prepolymer zu bilden, welches im Wesentlichen Hydroxy-Endgruppen aufweist. Das so gebildete Prepolymer wird dann in einem weiteren Verfahrensschritt mit weiterem Polyisocyanat, besonders bevorzugt mit wenigstens einem aromatischen Diisocyanat, umgesetzt, um das gewünschte Polyurethan zu erhalten. Durch den erfindungsgemäßen ersten Schritt gelingt es, ein Polyurethan zu erhalten, welches eine verringerte Gelb- bzw. Braunfärbung aufweist, auch wenn die Edukte, insbesondere das eingesetzte Polymerpolyol, bevorzugt aus nachwachsenden Rohstoffen stammt.

Die einzelnen Schritte des erfindungsgemäßen Verfahrens werden im Folgenden detailliert beschrieben:

### Schritt (A):

Schritt (A) des erfindungsgemäßen Verfahrens umfasst das Inkontaktbringen wenigstens eines Polymerpolyols mit wenigstens einem ersten Polyisocyanat in einer Menge von 0,5 bis 12 Mol-% der gesamten Menge an Polyisocyanat, um ein Prepolymer zu erhalten, welches im Wesentlichen Hydroxy-Endgruppen aufweist.

Erfindungsgemäß können im Allgemeinen alle dem Fachmann bekannten und für die Herstellung von Polyurethanen, insbesondere von thermoplastischen Polyurethanen, geeigneten Polymerpolyole eingesetzt werden. Erfindungsgemäß bevorzugt werden Polyesterpolyole und/oder Polyetherpolyole, besonders bevorzugt Polyesterpolyole, ganz besonders bevorzugt lineare Polyesterpolyole, eingesetzt.

Die Polyesterpolyole, insbesondere Polyesterdiole, können beispielsweise aus Dicarbonsäuren mit 2 bis 12 Kohlenstoffatomen, vorzugsweise 4 bis 10 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, beispielsweise in Form einer Bernstein-, Sebacin- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, beispielsweise Dimethylterephthalat oder Dimethyladipat, Carbonsäureanhydride, beispielsweise Bernsteinsäureanhydrid, Glutarsäureanhydrid oder Phthalsäureanhydrid, oder Carbonsäurechloride zu verwenden. Beispiele für mehrwertige Alkohole sind Glykole mit 2 bis 10, vorzugsweise 2 bis 6 Kohlenstoffatomen, beispielsweise Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol, 2-Methylpropandiol-1,3, 3-Methylpentandiol-1,5 oder Dipropylenglykol. Die mehrwertigen Alkohole können einzeln oder als Gemische, beispielsweise in Form einer 1,4-Butandiol- und/oder 1,3-Propandiolmischung verwendet werden.

Daneben können auch geringe Mengen von bis zu 3 Gew.-% an der Gesamtreaktionsmischung höherfunktionelle, niedermolekulare Polyole wie beispielsweise 1,1,1-Trimethylolpropan oder Pentaerythrit mitverwendet werden.

Erfindungsgemäß bevorzugt ist die Verwendung ausschließlich bifunktioneller Ausgangsverbindungen, d. h. Polymerdiol und Diisocyanat.

Ebenso kann es beispielsweise beim Einsatz von Dimethylestern der Dicarbonsäuren bei der Herstellung der bevorzugten Polyesterpolyole infolge nicht ganz vollständiger Umesterung dazu kommen, dass geringe Mengen an nicht umgesetzten Methylesterendgruppen die Funktionalität der Polyester auf unter 2,0, beispielsweise auf 1,95 oder auch auf 1,90 verringern.

Die Polykondensation zur Herstellung der erfindungsgemäß bevorzugt eingesetzten Polyesterpolyole, besonders bevorzugt Polyesterdiole, erfolgt nach dem Fachmann bekannten Verfahren, beispielsweise dadurch, dass man bei Temperaturen von 150 bis 270 °C zunächst unter Normaldruck oder leicht vermindertem Druck das Reaktionswasser austreibt und im späteren Verlauf den Druck langsam absenkt, beispielsweise auf 5 bis 20 mbar. Ein Katalysator ist grundsätzlich nicht erforderlich, wird aber bevorzugt zugesetzt. Beispielsweise kommen Zinn-(II)-Salze, Titan-(IV)-Verbindungen, Bismut-(III)-Salze und andere hierzu in Betracht.

Weiterhin kann es vorteilhaft sein, ein inertes Schleppgas, wie beispielsweise Stickstoff, zum Austreiben des Reaktionswassers zu verwenden. Daneben sind auch Methoden anwendbar, bei denen ein bei Raumtemperatur flüssiges Schleppmittel, beispielsweise Toluol, in einer Azeotropveresterung zum Einsatz kommt.

Normalerweise wird ein im Wesentlichen lineares Polyesterdiol eingesetzt. Es können jedoch auch Gemische von mehr als einem im Wesentlichen linearen Polyesterdiol verwendet werden.

Besonders bevorzugt wird erfindungsgemäß wenigstens ein Polyesterdiol bzw. eine Mischung mehrerer Polyesterdiole eingesetzt, enthaltend 40 bis 100 Gew.-%, bevorzugt zu 90 bis 100 Gew.-% bezogen auf alle eingesetzten Polyesterdiole, Sebacinsäure-1,3-propionat, Bernsteinsäure-1,3-propionat und/oder Adipinsäure-1,3-propionat. Bernsteinsäure-1,3-propionat wird aus Bernsteinsäure und 1,3-Propandiol aufgebaut. Sebacinsäure-1,3-propionat wird aus Sebacinsäure und 1,3-Propandiol aufgebaut. Adipinsäure-1,3-propionat wird aus Adipinsäure und 1,3-Propandiol aufgebaut.

Das erfindungsgemäß eingesetzte wenigstens eine Polymerpolyol, bevorzugt das wenigstens eine Polyesterpolyol, weiter bevorzugt das wenigstens eine Polyesterdiol, bzw. die Edukte zu deren Herstellung, können im Allgemeinen auf petrochemischem Weg gewonnen werden, oder aus biologischen Quellen, d. h. aus nachwachsenden Rohstoffen, stammen. Bevorzugt werden erfindungsgemäß Edukte, d. h. insbesondere das wenigstens eine Polymerpolyol, eingesetzt, die aus nachwachsenden Rohstoffen gewonnen werden.

Die besonders bevorzugt eingesetzte Sebacinsäure kann auf petrochemischem Weg hergestellt werden oder durch chemische Verfahren aus biologischen Quellen, beispielsweise Castor Oil, erhalten werden.

Ebenso kann 1,3-Propandiol auf petrochemischem Weg, beispielsweise unter Einsatz von Acrolein als Ausgangsverbindung, hergestellt werden oder aus biologischen Quellen stammen. So wird beispielsweise 1,3-Propandiol bei der Firma DuPont Tate & Lyle fermentativ aus Maissirup im großtechnischen Maßstab gewonnen.

Besonders bevorzugte Polyesterdiole werden unter Verwendung von mindestens 40 Gew.-% biobasierter Dicarbonsäure, insbesondere Sebacinsäure (bezogen auf das Gesamtgewicht der eingesetzten Dicarbonsäure) und/oder mindestens 40 Gew.-% biobasiertem mehrwertigem Alkohol, insbesondere 1,3-Propandiol (bezogen auf das Gesamtgewicht des eingesetzten Diols oder Propandiols), hergestellt.

Die bevorzugt eingesetzten Polyesterdiole besitzen erfindungsgemäß zahlenmittlere Molekulargewichte Mn von 950 bis 4000 g/mol, bevorzugt 1100 bis 3500 g/mol, besonders bevorzugt 1300 bis 2000 g/mol. Die Funktionalität der bevorzugt eingesetzten Polyesterdiole beträgt bevorzugt 1,8 bis 2,2, besonders bevorzugt 1,9 bis 2,1.

Erfindungsgemäß können im Allgemeinen alle dem Fachmann bekannten und für die Herstellung von Polyurethanen, insbesondere von thermoplastischen Polyurethanen, geeigneten Polyisocyanate eingesetzt werden.

Erfindungsgemäß bevorzugt werden organische Polyisocyanate, besonders bevorzugt organische Diisocyanate, verwendet.

Erfindungsgemäß kommen als organische Polyisocyanate, bevorzugt Diisocyanate, beispielsweise aliphatische, cycloaliphatische, araliphatische, heterocyclische und aromatische Polyisocyanate, bevorzugt Diisocyanate, in Betracht, wie sie beispielsweise in Justus Liebigs Annalen der Chemie, 562, Seiten 75 bis 136 , beschrieben werden.

Bevorzugt betrifft die vorliegende Erfindung das erfindungsgemäße Verfahren, wobei das wenigstens eine erste Polyisocyanat wenigstens ein aliphatisches Polyisocyanat, weiter bevorzugt wenigstens ein aliphatisches Diisocyanat, ist.

In einer weiteren bevorzugten Ausführungsform betrifft die vorliegende Erfindung das erfindungsgemäße Verfahren, wobei das wenigstens eine zweite Polyisocyanat wenigstens ein aromatisches Polyisocyanat, weiter bevorzugt wenigstens ein aromatisches Diisocyanat, ist.

Ganz bevorzugt betrifft die vorliegende Erfindung das erfindungsgemäße Verfahren, wobei das wenigstens eine erste Polyisocyanat wenigstens ein aliphatisches Polyisocyanat, weiter bevorzugt wenigstens ein aliphatisches Diisocyanat, ist, und das wenigstens eine zweite Polyisocyanat wenigstens ein aromatisches Polyisocyanat, weiter bevorzugt wenigstens ein aromatisches Diisocyanat, ist.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl -2,6-cyclohexan-diisocyanat sowie die entsprechenden Isomerengemische, 4,4'- Dicyclohexylmethandiisocyanat, 2,4'- Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-%, 4,4'-Diphenylmethandiisocyanat und 1,5-Naphthylendiisocyanat.

Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber bevorzugt höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenylpolymethylen-polyisocyanate.

Die erfindungsgemäß bevorzugt eingesetzten Polyisocyanate können nach dem Fachmann bekannten Verfahren hergestellt oder isoliert werden.

Erfindungsgemäß ist es möglich, dass in den Schritten (A) und (B) unterschiedliche Polyisocyanate eingesetzt werden.

Die vorliegende Erfindung betrifft daher bevorzugt das erfindungsgemäße Verfahren, wobei das wenigstens eine erste und das wenigstens eine zweite Polyisocyanat unterschiedlich sind.

Erfindungsgemäß ist es auch möglich, dass in den Schritten (A) und (B) identische Polyisocyanate eingesetzt werden.

Die vorliegende Erfindung betrifft daher bevorzugt das erfindungsgemäße Verfahren, wobei das wenigstens eine erste und das wenigstens eine zweite Polyisocyanat identisch sind.

In Schritt (A) des erfindungsgemäßen Verfahrens wird das wenigstens eine Polymerpolyol mit wenigstens einem ersten Polyisocyanat in einer Menge von 0,5 bis 12 Mol-% der gesamten Menge an Polyisocyanat, in Kontakt gebracht.

Die gesamte Menge an Polyisocyanat setzt sich erfindungsgemäß bevorzugt aus der in Schritt (A) zugesetzten Menge und der in Schritt (B) zugesetzten Menge zusammen, d. h. die gesamte Menge ist die Menge an wenigstens einem ersten Polyisocyanat und die Menge an wenigstens einem zweiten Polyisocyanat.

Erfindungsgemäß wird daher bevorzugt in Schritt (A) das wenigstens eine erste Polyisocyanat in einer Menge von 0,5 bis 12 Mol-%, besonders bevorzugt 1,0 bis 10 Mol-%, und in Schritt (B) das wenigstens eine zweite Polyisocyanat in einer Menge von 88 bis 99,5 Mol-%, besonders bevorzugt 90 bis 99,9 Mol-%, jeweils der gesamten Menge an Polyisocyanat, zugegeben. Die Angaben der Mengen an Polyisocyanat in den Schritten (A) und (B) des erfindungsgemäßen Verfahrens beziehen sich jeweils auf die gesamte Menge an Polyisocyanat, die in dem Verfahren eingesetzt wird, d. h. bevorzugt addieren sich die Mengen gemäß Schritt (A) und Schritt (B) zu 100 mol-%.

Durch den erfindungsgemäßen Schritt (A), insbesondere durch die Zugabe einer geringen Menge an wenigstens einem Polyisocyanat von 0,5 bis 12 Mol-%, gelingt es, in diesem ersten Schritt ein Zwischenprodukt zu erhalten, welches zu einem wesentlichen Anteil Alkoholgruppen als Endgruppen aufweist. Dieses in Schritt (A) erhaltene Zwischenprodukt mit endständigen Alkoholgruppen wird dann erfindungsgemäß in Schritt (B) mit wenigstens einem zweiten Polyisocyanat in Kontakt gebracht, um das erfindungsgemäß gewünschte Polyurethan zu erhalten.

Die gesamte Menge an Polyisocyanaten und die Menge des eingesetzten wenigstens einen Polymerpolyols werden erfindungsgemäß bevorzugt so bemessen, dass das Äquivalenzverhältnis der Summe aller vorhandenen NCO-Gruppen zur Summe aller vorhandenen HydroxyGruppen 0,9 : 1,0 bis 1,1 : 1,0, vorzugsweise 0,95 : 1,0 bis 1,10 : 1,0 beträgt.

Schritt (A) des erfindungsgemäßen Verfahrens wird in dem Fachmann bekannten Vorrichtungen zur Herstellung von Prepolymeren, beispielsweise beheizbaren / kühlbaren Rührkesseln, Reaktionsextrudern etc., durchgeführt.

Schritt (A) des erfindungsgemäßen Verfahrens wird bei dem Fachmann bekannten Temperaturen, beispielsweise 20 bis 250 °C durchgeführt.

Schritt (A) des erfindungsgemäßen Verfahrens kann in Gegenwart wenigstens eines Lösungsmittels, beispielsweise ausgewählt aus der Gruppe der inerten Lösungsmittel, d. h. Lösungsmittel, die keine reaktiven Wasserstoffatome aufweisen, bevorzugt ausgewählt aus der Gruppe bestehend aus Toluol, Dimethylformamid, Tetrahydrofuran etc. und Mischungen davon, oder in Abwesenheit eines Lösungsmittels durchgeführt werden.

Nach Schritt (A) des erfindungsgemäßen Verfahrens wird ein Prepolymer erhalten, welches im Wesentlichen Hydroxy-Endgruppen aufweist. Erfindungsgemäß bedeutet "im Wesentlichen", dass mehr als 70%, bevorzugt mehr als 80%, besonders bevorzugt mehr als 90%, der vorhandenen Endgruppen Hydroxy-Endgruppen sind. Die gegebenenfalls verbleibenden Endgruppen sind Isocyanat-Endgruppen.

Erfindungsgemäß ist es möglich, dass das Prepolymer, welches im Wesentlichen Hydroxy-Endgruppen aufweist, nach Schritt (A) isoliert wird.

Die vorliegende Erfindung betrifft daher bevorzugt das erfindungsgemäße Verfahren, wobei das Prepolymer, welches im Wesentlichen Hydroxy-Endgruppen aufweist, nach Schritt (A) isoliert wird.

Methoden zur Isolierung des nach Schritt (A) erhaltenen Prepolymers sind dem Fachmann an sich bekannt, beispielsweise Entfernen eines eventuell benutzten Lösungsmittels durch Destillation, gegebenenfalls im Vakuum. Da Schritt (A) bevorzugt in Substanz durchgeführt wird, umfasst das Isolieren gemäß dieser Ausführungsform bevorzugt das Lagern und Bereitstellen der Reaktionsmischung aus Schritt (A), um in Schritt (B) eingesetzt zu werden.

Nach einer erfindungsgemäß durchgeführten Isolierung kann das Prepolymer beispielsweise gelagert werden, um zu einem späteren Zeitpunkt in Schritt (B) des Verfahrens eingesetzt werden.

Erfindungsgemäß ist es auch möglich, dass das Prepolymer, welches im Wesentlichen Hydroxy-Endgruppen aufweist, nach Schritt (A) nicht isoliert und direkt in Schritt (B) eingesetzt wird.

Die vorliegende Erfindung betrifft daher bevorzugt das erfindungsgemäße Verfahren, wobei das Prepolymer, welches im Wesentlichen Hydroxy-Endgruppen aufweist, nach Schritt (A) nicht isoliert und direkt in Schritt (B) eingesetzt wird.

In dieser erfindungsgemäßen Ausführungsform wird das in Schritt (A) erhaltene Prepolymer nicht isoliert, sondern direkt in Schritt (B) überführt. In einer besonders bevorzugten Ausführungsform werden die Schritte (A) und (B) in einer Vorrichtung durchgeführt, d. h. zunächst erfolgt die Zugabe gemäß Schritt (A), und kurz danach, d. h. nach höchstens wenigen Minuten, erfolgt die Zugabe gemäß Schritt (B).

### Schritt (B):

Schritt (B) des erfindungsgemäßen Verfahrens umfasst das Inkontaktbringen des Prepolymers aus Schritt (A) mit wenigstens einem zweiten Polyisocyanat und gegebenenfalls weiteren Additiven, um das Polyurethan zu erhalten.

Erfindungsgemäß, wie bereits zu Schritt (A) ausgeführt, kann in Schritt (B) ein anderes wenigstens ein Polyisocyanat als in Schritt (A), oder das identische wenigstens eine Polyisocyanat verwendet werden.

Erfindungsgemäß wird in Schritt (B) des erfindungsgemäßen Verfahrens eine entsprechende Menge an wenigstens einem zweiten Polyisocyanat hinzugegeben, so dass, zusammen mit der in Schritt (A) hinzugegebenen Menge an wenigstens einem ersten Polyisocyanat die gesamte Menge an Polyisocyanat erhalten wird. Dies bedeutet, dass bevorzugt an keiner weiteren Stelle des erfindungsgemäßen Verfahrens weiteres Polyisocyanat hinzugegeben wird.

In Schritt (B) des erfindungsgemäßen Verfahrens können gegebenenfalls weitere Additive hinzugegeben werden.

Erfindungsgemäß gegebenenfalls vorliegende Additive sind beispielsweise ausgewählt aus der Gruppe bestehend aus Kettenverlängerungsmitteln, Katalysatoren, Hydrolyseschutzmitteln, UV-Schutzmitteln, Oxidationsschutzmitteln, Wachsen, weiteren üblichen Hilfsmitteln und Mischungen davon.

Als Kettenverlängerungsmittel können beispielsweise allgemein bekannte aliphatische, araliphatische, aromatische und/oder cycloaliphatische Verbindungen mit einem Molekulargewicht von 50 bis 499 g/mol, bevorzugt bifunktionelle Verbindungen, eingesetzt werden, beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt unverzweigte Alkandiole, insbesondere 1,3-Propandiol und Butan-1,4-diol.

Geeignete Katalysatoren, welche insbesondere die Reaktion zwischen dem wenigstens einen Polymerpolyol und den Polyisocyanaten beschleunigen, sind die nach dem Stand der Technik bekannten und üblichen tertiären Amine, wie z. B. Triethylamin, Dimethylcyclohexylamin, N-Methylmorpholin, N,N'- Dimethylpiperazin, 2-(Dimethylaminoethoxy)-ethanol, Diazabicyclo-(2,2,2)- octan und ähnliche sowie insbesondere organische Metallverbindungen wie Titansäureester, Eisenverbindungen wie z. B. Eisen- (MI)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polymerpolyol eingesetzt.

Übliche Hilfsmittel sind beispielsweise Treibmittel, oberflächenaktive Substanzen, Flammschutzmittel, Keimbildungsmittel, Gleit-und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel, Weichmacher und Metalldeaktivatoren.

Als Hydrolyseschutzmittel werden bevorzugt oligomere und/oder polymere aliphatische oder aromatische Carbodiimide verwendet. Um die erfindungsgemäßen Polyurethan gegen Alterung zu stabilisieren, werden dem Polyurethan bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Thiosynergisten, Organophosphorverbindungen des trivalenten Phosphors, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), Seiten 98 bis 136. Ist das erfindungsgemäße Polyurethan während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, Seiten 98 bis 107 und Seiten 116 bis 121. Bevorzugt sind solche phenolische Antioxidantien, deren Molekulargewicht grösser als 700 g/mol sind. Ein Beispiel für ein bevorzugt verwendetes phenolisches Antioxidans ist Pentaerythrityl-tetrakis (3-(3,5-bis(1 ,1- dimethylethyl)-4-hydroxyphenyl)propionate) (Irganox® 1010) oder andere hochmolekularere Kondensationsprodukte aus entsprechenden Antioxidantien. Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1 ,5 Gew.-%, jeweils bezogen auf das Gesamtgewicht des Polyurethans. Weiterhin werden bevorzugt Antioxidantien verwendet, die amorph oder flüssig sind. Auch wenn die erfindungsgemäßen Polyurethane aufgrund ihrer bevorzugten Zusammensetzung deutlich stabiler gegen ultravioletter Strahlung sind als z. B. mit Phthalaten oder Benzoaten weichgemachte Polyurethane, so ist eine Stabilisierung enthaltend nur phenolische Stabilisatoren oft nicht ausreichend. Aus diesem Grund werden die erfindungsgemäßen Polyurethane, die UV- Licht ausgesetzt werden, bevorzugt zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Oxalsäureamide (Oxanilide), insbesondere 2-Ethoxy-2'-ethyloxanilid, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seiten 116 bis 122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV- Absorber ein Molekulargewicht von nicht größer als 5000 g/mol, besonders bevorzugt von nicht größer als 2000 g/mol aufweisen. Besonders geeignet als UV- Absorber ist die Gruppe der Benzotriazole. Beispiele für besonders geeignete Benzotriazole sind Tinuvin® 213, Tinuvin® 328, Tinuvin® 571 , sowie Tinuvin® 384 und das Eversorb® 82. Bevorzugt werden die UV-Absorber in Mengen zwischen 0,01 und 5 Gew.-%, bezogen auf die Gesamtmasse Polyurethan zudosiert, besonders bevorzugt zwischen 0,1 und 2,0 Gew.-%, insbesondere zwischen 0,2 und 0,5 Gew.-%, jeweils bezogen auf das Gesamtgewicht des Polyurethans. Oft ist eine oben beschriebene UV-Stabilisierung basierend auf einem Antioxidans und einem UV-Absorber noch nicht ausreichend, um eine gute Stabilität des erfindungsgemäßen Polyurethans gegen den schädlichen Einfluss von UV-Strahlen zu gewährleisten. In diesem Falle kann zusätzlich zu dem Antioxidans und dem UV-Absorber, noch ein Hindered-Amine Light Stabilizer (HALS) zugegeben werden. Eine besonders bevorzugte UV- Stabilisierung enthält eine Mischung aus einem phenolischen Stabilisator, einem Benzotriazol und einer HALS-Verbindung in den oben beschriebenen bevorzugten Mengen. Es können aber auch Verbindungen eingesetzt werden, die die funktionellen Gruppen der Stabilisatoren vereinigen wie zum Beispiel sterische gehinderte Piperidylhydroxybenzyl-Kondensationsprodukte wie zum Beispiel Di(1,2,2,6,6-pentamethyl-4-piperidyl)-2-butyl-2-(3,5-di-tert-butyl-4-hydroxybenzyl) malonate, Tinuvin® 144.

Besonders geeignet sind auch Wachse, die sowohl bei der technischen Herstellung der Polyurethane als auch bei ihrer Verarbeitung wichtige Aufgaben übernehmen. Das Wachs dient als friktionsminderndes inneres und äußeres Gleitmittel und verbessert so die Fließeigenschaften des Polyurethans. Zusätzlich soll es als Trennmittel das Ankleben des Polyurethans an das umgebende Material (z. B. das Werkzeug) verhindern, und als Dispergator für andere Zusatzstoffe, z. B. Pigmente und Antiblockmittel, wirken. Geeignet sind z. B. Fettsäureester, wie Stearinsäureester und Montansäureester und deren Metallseifen, daneben Fettsäureamide, wie Stearylamide und Ölsäureamide, oder auch Polyethylenwachse. Eine Übersicht der in Thermoplasten eingesetzten Wachse findet sich in H. Zweifel (Ed.): Plastics Additives Handbook, 5. Ausgabe, Hanser Verlag, München 2001 , S. 443 ff., EP-A 308 683, EP-A 670 339 und JP-A 5 163431.

Verbesserungen können auch durch den Einsatz von Ester- und Amidkombinationen gemäß DE-A 19 607 870 und durch den Einsatz von speziellen Wachsmischungen von Montansäure- und Fettsäurederivaten (DE-A 19 649 290) erzielt werden, weiterhin durch die Verwendung von Hydroxy-Stearylsäureamide gemäß DE 102006009096 A1.

Nähere Angaben über die oben genannten Hilfsmittel und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte weisen die Einheit [g/mol] auf.

Schritt (B) des erfindungsgemäßen Verfahrens kann im Allgemeinen bei jeder dem Fachmann bekannten Temperatur durchgeführt werden, beispielsweise 20 bis 250 °C, bevorzugt 40 bis 230 °C.

Daher betrifft die vorliegende Erfindung auch bevorzugt das erfindungsgemäße verfahren, wobei Schritt (B) bei einer Temperatur von 40 bis 230°C erfolgt.

### Optionaler Schritt (C):

In einer weiteren bevorzugten Ausführungsform betrifft die vorliegende Erfindung das erfindungsgemäße Verfahren, wobei nach Schritt (B) der folgende Schritt (C) durchgeführt wird:
(C) Tempern des in Schritt (B) erhaltenen Polyurethans bei einer Temperatur von 30 bis 120°C.

Das erfindungsgemäß bevorzugte Tempern gemäß Schritt (C) des erfindungsgemäßen Verfahrens dient dazu, das in Schritt (B) erhaltene Polyurethan zu reifen, d. h. die finalen Eigenschaften des Polyurethans zu erhalten.

Schritt (C) wird bevorzugt bei 40 bis 100 °C, besonders bevorzugt 60 bis 90 °C durchgeführt.

Schritt (C) kann in allen dem Fachmann bekannten Vorrichtungen erfolgen, beispielsweise auf einer Heizplatte, in einem Temperierschrank, einem geheizten Lagertank (Silo) oder ähnlichen Einrichtungen, die eine Lagerung des Polyurethans bei erhöhten Temperaturen ermöglichen.

Schritt (C) erfolgt im Allgemeinen so lange, bis der gewünschte Effekt eintritt, beispielsweise 1 bis 48 Stunden, bevorzugt 2 bis 36 Stunden, besonders bevorzugt 10 bis 30 Stunden.

Das nach Schritt (B) bzw. (C) des erfindungsgemäßen Verfahrens erhaltene Polyurethan, das üblicherweise als Granulat oder in Pulverform vorliegt, kann nach dem Fachmann bekannten Verfahren zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen weiterverarbeitet werden, wie z. B. Spritzguss, Kalandrieren oder Extrusion.

Die nach den erfindungsgemäßen Verfahren herstellbaren thermoplastischen Polyurethane, bevorzugt Beschichtungen, Kabel, Steckverbindungen, Solarmodule, Folien, Formteile, Schuhsohlen und Schuhteile, Bälle und Ballteile, Rollen, Fasern, Verkleidungen in Automobilen, Profile, Laminate und Wischerblätter, Schläuche, Kabelstecker, Faltenbälge, Schleppkabel, Kabelummantelungen, Dichtungen, Non Woven-Gewebe, Riemen oder Dämpfungselemente weisen die eingangs dargestellten Vorteile auf.

In einer bevorzugten Ausführungsform betrifft die vorliegende Erfindung das erfindungsgemäße Polyurethan, wobei es einen Yellowness-Index von 1 bis 60, bevorzugt 1 bis 40, aufweist.

Das erfindungsgemäß hergestellte Polyurethan kann vorteilhaft in allen für thermoplastische Polyurethane spezifische Anwendungen eingesetzt werden. Die vorliegende Erfindung betrifft daher auch die Verwendung des erfindungsgemäßen Polyurethans als Beschichtungen, Kabel, Steckverbindungen, Solarmodule, Folien, Formteile, Schuhsohlen und Schuhteile, Bälle und Ballteile, Rollen, Fasern, Verkleidungen in Automobilen, Profile, Laminate und Wischerblätter, Schläuche, Kabelstecker, Faltenbälge, Schleppkabel, Kabelummantelungen, Dichtungen, Non Woven-Gewebe, Riemen oder Dämpfungselemente.

### Beispiele

### Eingesetzte Edukte

### Polymerpolyol 1:

Als Polymerpolyol 1 wurde ein Polyesterdiol aufgebaut aus Sebacinsäure, Adipinsäure und 1,3-Propandiol eingesetzt, Molmasse = 1400 g/mol, OH-Zahl = 79,3
Kettenverlängerer (KV) 1 ist 1,3-Propandiol, Molmasse = 76,09 g/mol
Isocyanat 1 ist 4,4'-Diphenylmethandiisocyanat (4,4'-MDI), Molmasse = 250,26 g/mol
Isocyanat 2 ist Hexandiisocyanat (HDI), Molmasse = 168,20 g/mol
Hydrolyseschutz 1 ist ein Carbodiimid basiertes Hydrolyseschutzmittel (Elastostab® H01)

### Verfahren

### Verfahren 1 (Vergleich)

Polymerpolyol 1 wird zusammen mit Kettenverlängerer 1 und Isocyanat 1 zur Reaktion gebracht. Hydrolyseschutz 1 wird ebenfalls zur Reaktionsmischung gegeben. Die erhaltene Reaktionsmischung wird auf eine beheizbare Platte ausgegossen und für 10 Minuten bei 120 °C ausreagiert. Anschließend wird die erhaltene Polymerplatte bei 80 °C für 24 Stunden getempert. Die Polymerplatte wird anschließend granuliert und das Granulat im Spritzgussverfahren zu einer Prüfplatte geformt.

### Verfahren 2 (erfindungsgemäß)

In einem ersten Schritt wird Polymerpolyol 1 mit 5 Mol-% Isocyanat 2 zur Reaktion gebracht. Es entsteht ein zweifunktionelles Prepolymer 1 mit Hydroxyl-Endgruppen. Dieses Prepolymer 1 ist lagerfähig und muss nicht sofort weiterverarbeitet werden.

In einem separaten Reaktionsschritt wird das erhaltene Prepolymer 1 mit Kettenverlängerer 1 und Isocyanat 1 zur Reaktion gebracht. Hydrolyseschutz 1 wird ebenfalls zugegeben.

Die erhaltene Reaktionsmischung wird auf eine beheizbare Platte ausgegossen und für 10 Minuten bei 120 °C ausreagiert. Anschließend wird die erhaltene Polymerplatte bei 80 °C für 24 Stunden getempert. Die Polymerplatte wird anschließend granuliert und das Granulat im Spritzgussverfahren zur Prüfplatte geformt.

### Verfahren 3 (erfindungsgemäß)

Polymerpolyol 1 wird zunächst mit 1 Mol-% Isocyanat 2 zur Reaktion gebracht. Kurz nach Zugabe von Isocyanat 2 wird Isocyanat 1, Kettenverlängerer 1 und Hydrolyseschutz 1 zugegeben und ebenfalls zur Reaktion gebracht.

Die erhaltene Reaktionsmischung wird auf eine beheizbare Platte ausgegossen und für 10 Minuten bei 120 °C ausreagiert. Anschließend wird die erhaltene Polymerplatte bei 80 °C für 24 Stunden getempert. Die Polymerplatte wird anschließend granuliert und das Granulat im Spritzgussverfahren zu einer Prüfplatte geformt.

### Beispiel 1 (Vergleich)

Nach Verfahren 1 werden 55,90 Gew.-% Polymerpolyol 1, 7,80 Gew.-% KV 1, 35,4 Gew.-% Isocyanat 1 und 0,90 Gew.-% Hydrolyseschutz 1 umgesetzt. Die Ergebnisse sind in Tabelle 1 dargestellt.

### Beispiel 2 (erfindungsgemäß)

Gemäß Verfahren 2 werden 56,70 Gew.-% Prepolymer 1, 7,65 Gew.-% Kettenverlängerer 1, 35,20 Gew.-% Isocyanat 1 und 0,45 Gew.-% Hydrolyseschutz 1 umgesetzt. Die Ergebnisse werden in Tabelle 1 dargestellt.

### Beispiel 3 (Vergleich)

Nach Verfahren 1 werden 55,90 Gew.-% Polymerpolyol 1, 7,60 Gew.-% Kettenverlängerer 1, 35,20 Gew.-% Isocyanat 1 und 1,30 Gew.-% Hydrolyseschutz 1 umgesetzt. Die Ergebnisse werden in Tabelle 1 dargestellt.

### Beispiel 4 (erfindungsgemäß)

Nach Verfahren 3 werden 56,60 Gew.-% Polymerpolyol 1, 7,66 Gew.-% Kettenverlängerer 1, 35,07 Gew.-% Isocyanat 1, 0,24 Gew.-% Isocyanat 2 und 0,45 Gew.-% Hydrolyseschutz 1 umgesetzt. Die Ergebnisse werden in Tabelle 1 dargestellt.

**Tabelle 1:**

| | Beispiel 1 | Beispiel 2 | Beispiel 3 | Beispiel 4 |
|---|---|---|---|---|
| Yellowness-Index | 43,3 | 28,6 | 44 | 25,1 |
| Hardness (Shore A) | 93 | 90 | 92 | 90 |
| Tensile Strength [MPa] | 47 | 49 | 42 | 35 |
| Elongation at break [%] | 500 | 490 | 730 | 520 |
| Tear Strength [N/nm] | 105 | 92 | 102 | 94 |
| Abrasion Loss [mm³] | 32 | 32 | 26 | 60 |

Die einzelnen Parameter werden nach folgenden Methoden bestimmt:
Yellowness-Index: ASTM E313
Hardness: DIN 53505
Tensile-Strength: DIN 53504
Elongation at break: DIN 53504
Tear Strength: DIN ISO 34-1, B (b)
Abrasion loss: DIN ISO 4649

Wie den Beispielen zu entnehmen ist, sind die mechanischen Werte der jeweiligen Versuchspaare nahezu unverändert. Allerdings reduziert sich überraschend der Yellowness-Index von ursprünglich über 40 auf 25 bis 28. Diese Änderung ist deutlich mit dem Auge wahrzunehmen.

## Patentansprüche

1. Verfahren zur Herstellung eines Polyurethans, umfassend wenigstens die Schritte:
(A) Umsetzung wenigstens eines Polyesterpolyols und/oder Polyetherpolyols mit wenigstens einem ersten Polyisocyanat in einer Menge von 0,5 bis 12 mol-% der gesamten Menge an Polyisocyanat, um ein Prepolymer zu erhalten, bei dem mehr als 70 % der vorhandenen Endgruppen Hydroxy-Endgruppen sind, und
(B) Umsetzung des Prepolymers aus Schritt (A) mit wenigstens einem zweiten Polyisocyanat in einer Menge von 88 bis 99,5 mol-% der gesamten Menge an Polyisocyanat und gegebenenfalls weiteren Additiven, um das Polyurethan zu erhalten, wobei sich die Mengen an Polyisocyanaten gemäß Schritt (A) und Schritt (B) zu 100 mol-% addieren.

2. Verfahren nach Anspruch 1, **dadurch gekennzeichnet, dass** das wenigstens eine erste Polyisocyanat wenigstens ein aliphatisches Polyisocyanat ist.

3. Verfahren nach Anspruch 1 oder 2, **dadurch gekennzeichnet, dass** das wenigstens eine erste und das wenigstens eine zweite Polyisocyanat unterschiedlich sind.

4. Verfahren nach Anspruch 1 oder 2, **dadurch gekennzeichnet, dass** das wenigstens eine erste und das wenigstens eine zweite Polyisocyanat identisch sind.

5. Verfahren nach einem der Ansprüche 1 bis 4, **dadurch gekennzeichnet, dass** das Prepolymer, welches im Wesentlichen Hydroxy-Endgruppen aufweist, nach Schritt (A) nicht isoliert, und direkt in Schritt (B) eingesetzt wird.

6. Verfahren nach einem der Ansprüche 1 bis 4, **dadurch gekennzeichnet, dass** das Prepolymer, bei dem mehr als 70 % der vorhandenen Endgruppen Hydroxy-Endgruppen sind, nach Schritt (A) isoliert wird.

7. Verfahren nach einem der Ansprüche 1 bis 6, **dadurch gekennzeichnet, dass** Schritt (B) bei einer Temperatur von 20 bis 250°C erfolgt.

8. Verfahren nach einem der Ansprüche 1 bis 7, **dadurch gekennzeichnet, dass** nach Schritt (B) der folgende Schritt (C) durchgeführt wird:
(C) Tempern des in Schritt (B) erhaltenen Polyurethans bei einer Temperatur von 30 bis 120 °C.

## Claims

1. A process for producing a polyurethane, comprising at least the following steps:
(A) reaction of at least one polyester polyol and/or polyether polyol with a quantity of from 0.5 to 12 mol%, based on the total quantity of polyisocyanate, of at least one first polyisocyanate in order to obtain a prepolymer in which more than 70% of the terminal groups present are terminal hydroxy groups, and
(B) reaction of the prepolymer from step (A) with a quantity of from 88 to 99.5 mol%, based on the total quantity of polyisocyanate, of at least one second polyisocyanate, and optionally with further additives, in order to obtain the polyurethane, the total of the quantities of polyisocyanates of step (A) and step (B) being 100 mol%.

2. The process according to claim 1, wherein the at least one first polyisocyanate is at least one aliphatic polyisocyanate.

3. The process according to claim 1 or 2, wherein the at least one first and the at least one second polyisocyanate are different.

4. The process according to claim 1 or 2, wherein the at least one first and the at least one second polyisocyanate are identical.

5. The process according to any of claims 1 to 4, wherein the prepolymer which in essence has terminal hydroxy groups is not isolated after step (A) and is used directly in step (B).

6. The process according to any of claims 1 to 4, wherein the prepolymer in which more than 70% of the terminal groups present are terminal hydroxy groups is isolated after step (A).

7. The process according to any of claims 1 to 6, wherein step (B) takes place at a temperature of from 20 to 250°C.

8. The process according to any of claims 1 to 7, wherein the following step (C) is carried out after step (B):
(C) conditioning, at a temperature of from 30 to 120°C, of the polyurethane obtained in step (B) .

## Revendications

1. Procédé de fabrication d'un polyuréthane, comprenant au moins les étapes suivantes :
(A) la mise en réaction d'au moins un polyester-polyol et/ou d'un polyéther-polyol avec au moins un premier polyisocyanate en une quantité de 0,5 à 12 % en moles de la quantité totale de polyisocyanate, afin d'obtenir un prépolymère dans lequel plus de 70 % des groupes terminaux présents sont des groupes terminaux hydroxy, et
(B) la mise en réaction du prépolymère de l'étape (A) avec au moins un deuxième polyisocyanate en une quantité de 88 à 99,5 % en moles de la quantité totale de polyisocyanate et éventuellement des additifs supplémentaires, afin d'obtenir le polyuréthane, la somme des quantités de polyisocyanates selon l'étape (A) et l'étape (B) étant de 100 % en moles.

2. Procédé selon la revendication 1, **caractérisé en ce que** ledit au moins un premier polyisocyanate est au moins un polyisocyanate aliphatique.

3. Procédé selon la revendication 1 ou 2, **caractérisé en ce que** ledit au moins un premier et ledit au moins un deuxième polyisocyanate sont différents.

4. Procédé la revendication 1 ou 2, **caractérisé en ce que** ledit au moins un premier et ledit au moins un deuxième polyisocyanate sont identiques.

5. Procédé selon l'une quelconque des revendications 1 à 4, **caractérisé en ce que** le prépolymère qui comprend essentiellement des groupes terminaux hydroxy n'est pas isolé après l'étape (A), et utilisé directement dans l'étape (B).

6. Procédé selon l'une quelconque des revendications 1 à 4, **caractérisé en ce que** le prépolymère dans lequel plus de 70 % des groupes terminaux présents sont des groupes terminaux hydroxy est isolé après l'étape (A).

7. Procédé selon l'une quelconque des revendications 1 à 6, **caractérisé en ce que** l'étape (B) a lieu à une température de 20 à 250 °C.

8. Procédé selon l'une quelconque des revendications 1 à 7, **caractérisé en ce que** l'étape (C) suivante est réalisée après l'étape (B) :
(C) le recuit du polyuréthane obtenu à l'étape (B) à une température de 30 à 120 °C.
